# EUROPEAN PATENT APPLICATION

(11) **EP 4 808 061 A1**
(43) Date of publication of application: **16.09.2026**
(21) Application number: 24896404.1
(22) Date of filing: 21.11.2024
(51) Int. Cl.: H04L 27/26

(54) **METHOD FOR DETERMINING SENSING SIGNAL, STORAGE MEDIUM, AND ELECTRONIC APPARATUS**

(30) Priority: 28.11.2023 CN 202311615526
(71) Applicant: ZTE CORPORATION, Shenzhen, Guangdong 518057 (CN)
(72) Inventor: WEI, Hao, Shenzhen, Guangdong 518057 (CN)
(74) Representative: Mozzi, Matteo
(86) International application number: PCT/CN2024/133563
(87) International publication number: WO 2025/113313

(57) **Abstract**

provided are a method for determining a sensing signal, a storage medium and an electronic device. The method includes: determining a time-frequency domain resource and a data transmission parameter according to channel quality of a channel, a communication requirement of a terminal, and a sensing requirement of a base station, wherein the time-frequency domain resource includes a time domain resource and a frequency domain resource; sending, to the terminal, allocation indication information of the time-frequency domain resource and the data transmission parameter, and obtaining a data signal which is sent by the terminal at a position of the time-frequency domain resource of the channel according to the data transmission parameter; and reconstructing the data signal to obtain a sensing signal at the position of the time-frequency domain resource of the data signal, and sensing the channel and an environment on the basis of the sensing signal.

## Description

### Cross-Reference to Related Application

The present disclosure claims the priority of Chinese Patent Application 202311615526.6, filed on 28 November 2023, the disclosure of which is incorporated herein by reference in its entirety.

### Technical Field

The embodiments of the present disclosure relate to the field of communications, and in particular, to a method for determining a sensing signal, a storage medium, and an electronic device.

### Background

Integrated Sensing and Communications (ISAC) is not only a key technology in the field of communications but has also been recognized as one of the six major application directions for the future released by the IMT-2030 organization. It holds the potential to achieve deep integration of communication and sensing in terms of resources, data, and capabilities, thereby meeting the development demands of future emerging services.

Depending on the transmission and reception methods of sensing signals, the operation modes of ISAC can be classified into several types: base station self-transmit and receive, inter-base station cooperative sensing, base station transmit and terminal receive, terminal transmit and base station receive, terminal self-transmit and receive, and inter-terminal cooperative sensing. Currently, academia has defined the capacity limits and interrelationships of ISAC from an information theory perspective, while industry research mainly focuses on the sensing aspect, particularly on the base station self-transmitting and self-receiving mode, as well as the cooperative sensing mode between base stations.

As ISAC technology is about to be initiated as a project in the 3GPP standardization organization, research and discussions on ISAC have gradually expanded from purely enabling sensing capabilities to exploring how to integrate with existing communication architectures. In particular, some solutions related to sensing-assisted communication have been proposed by scholars, while research on communication-assisted sensing remains relatively limited. Furthermore, how to achieve sensing and the integration of communication and sensing in the two traditional communication transmission modes: base station transmit and terminal receive, and terminal transmit and base station receive, will be an urgent requirement for the large-scale deployment of ISAC in the B5G or 6G era.

Regarding the issue in related technologies where the integration of sensing and communication cannot be achieved with the assistance of communication data for sensing, no effective solution has been proposed so far.

### Summary

Embodiments of the present disclosure provide a method for determining a sensing signal, a storage medium, and an electronic device, so as to at least solve the issue in related technologies where the integration of sensing and communication cannot be achieved with the assistance of communication data for sensing.

According to one embodiment of the present disclosure, a method for determining a sensing signal is provided, which is applied to a base station. The method comprises: determining time-frequency domain resources and data transmission parameters according to a channel quality of a channel, communication requirements of a terminal, and sensing requirements of a base station, wherein the time-frequency domain resources comprise time domain resources and frequency domain resources; sending, to the terminal, allocation indication information for the time-frequency domain resource and the data transmission parameter, and obtaining a data signal which is sent by the terminal at a position of the time-frequency domain resource of the channel according to the data transmission parameters; and reconstructing the data signal to obtain a sensing signal at the position of the time-frequency domain resource of the data signal, and sensing the channel and an environment on the basis of the sensing signal.

According to one embodiment of the present disclosure, a method for determining a sensing signal is also provided, which is applied to a terminal. The method comprises: sending sensing requirements of the terminal to a base station; obtaining allocation indication information sent by the base station and comprising time-frequency domain resources and data transmission parameters; and obtaining a data signal sent by the base station at a position of the time-frequency domain resource of a channel according to the data transmission parameters, wherein the time-frequency domain resources and the data transmission parameters are resources and parameters determined by the base station according to the channel quality of the channel, communication requirements of the base station and sensing requirements of the terminal, the time-frequency domain resources comprising time domain resources and frequency domain resources; and reconstructing the data signal to obtain a sensing signal at the position of the time-frequency domain resource of the data signal, and sensing the channel and an environment on the basis of the sensing signal.

According to another embodiment of the present disclosure, further provided is a computer readable storage medium storing a computer program, wherein the computer program is configured to execute, when running, the steps in any one of the described method embodiments.

According to another embodiment of the present disclosure, further provided is an electronic device, comprising a memory and a processor, wherein the memory stores a computer program, and the processor is configured to run the computer program to execute the steps in any one of the method embodiments.

### Brief Description of the Drawings

Fig. 1 is a hardware structure block diagram of a mobile terminal for determining a sensing signal according to an embodiment of the present disclosure;
Fig. 2 is a flowchart of a method for determining a sensing signal according to an embodiment of the present disclosure;
Fig. 3 is a flowchart of another method for determining a sensing signal according to an embodiment of the present disclosure;
Fig. 4 is a flowchart of performing modulation-based reconstruction on a signal according to an embodiment of the present disclosure;
Fig. 5 is a flowchart of performing decoding-based reconstruction on a signal according to an embodiment of the present disclosure;
Fig. 6 is a structural block diagram of a base station according to an embodiment of the present disclosure;
Fig. 7 is a structural block diagram of a terminal according to an embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the present disclosure are used to distinguish similar objects, and are not necessarily used to describe a specific sequence or order.

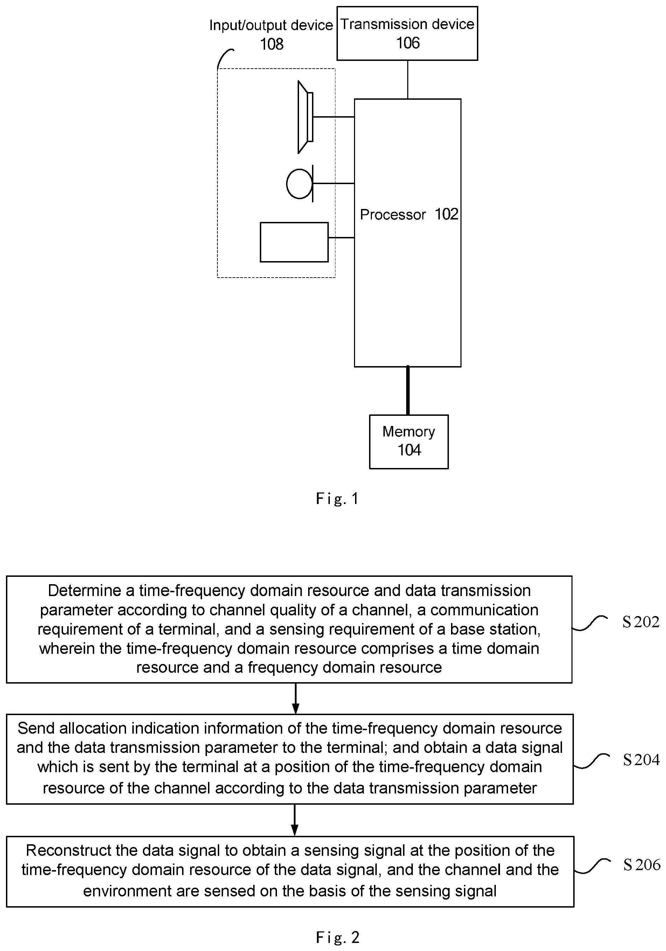

Method embodiments provided in the embodiments of the present disclosure may be executed in a mobile terminal, a computer terminal, or similar computing apparatuses. Taking operation on a mobile terminal as an example, Fig. 1 is a hardware structure block diagram of a mobile terminal for determining a sensing signal according to an embodiment of the present disclosure. As shown in Fig. 1, the terminal may include one or more (only one is shown in Fig. 1) processors 102 (the processors 102 may include, but are not limited to, a microprocessor or a programmable logic device FPGA) and a memory 104 configured to store data, wherein the terminal can further include a transmission device 106 for a communication function and an input/output device 108. Those ordinarily skilled in the art can appreciate that the structure shown in Fig. 1 is for illustrative purposes only, but not limit the structure of the mobile terminal. For example, the mobile terminal may also include more or fewer components than that shown in Fig. 1, or have a different configuration than that shown in Fig. 1.

The memory 104 may be configured to store a computer program, for example, a software program and a module of application software, such as a computer program corresponding to the method for determining a sensing signal in the embodiment of the present disclosure. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the mobile terminal over a network. Examples of the described network include, but are not limited to the Internet, an intranet, a local area network, a mobile communication network, and a combination thereof.

The transmission device 106 is configured to receive or transmit data over a network. Specific examples of the described network may include a wireless network provided by a communication provider of the mobile terminal. In one example, the transmission device 106 includes a network interface controller (NIC) which may be connected to other network devices by means of a base station, thereby being able to communicate with the Internet. In one example, the transmission device 106 may be a radio frequency (RF) module for communicating wirelessly with the Internet.

The present embodiment provides a method for determining a sensing signal operating on a base station, which is applied to a operation mode of terminal-to-base station transmission. Fig. 2 is a flowchart of a method for determining a sensing signal according to an embodiment of the present disclosure. As shown in Fig. 2, the flow comprises steps S202-S206 as follows:
step S202: communication requirements of a terminal are acquired; and time-frequency domain resources and data transmission parameters are determined according to a channel quality of a channel, communication requirements of a terminal, and sensing requirements of a base station, wherein the time-frequency domain resources comprise time domain resources and frequency domain resources.

As an example, the communication requirements include: the number of bits of data information and a block error rate (BLER) of data transmission; the sensing requirements comprise: sensing parameter accuracy and sensing accuracy; and the sensing parameter accuracy comprises: a maximum sensing distance and a sensing distance resolution, a maximum sensing speed and a sensing speed resolution.

As an example, the channel quality may be determined by means of a channel quality indication (CQI), wherein the channel is a channel used by the base station for communication with the terminal.

As an example, the data transmission parameters include a modulation order and a coding rate.

In an exemplary embodiment, before step S202, the method further includes: obtaining a channel measurement signal sent by the terminal; and determining a channel quality of the channel according to the channel measurement signal.

Exemplarily, before step S202, the terminal may further send the communication requirements of the terminal to the base station.

In an exemplary embodiment, the foregoing step S202 may be implemented by the following steps S11-S13:
step S11: first time-frequency domain resources and first data transmission parameters are determined according to the channel quality of the channel and the communication requirements of the terminal;
step S12: second time-frequency domain resources are determined according to the channel quality of the channel and the sensing requirements of the base station; and
step S13: on the basis of time-frequency domain resources that can be allocated by the base station, the time-frequency domain resources are determined according to the first time-frequency domain resources and the second time-frequency domain resources, and the first data transmission parameters are adjusted on the basis of the time-frequency domain resources, so as to obtain the data transmission parameters.

It should be noted that the base station needs to dynamically allocate time-frequency domain resources by means of a scheduling algorithm to maximize the utilization of available resources and ensure network fairness and efficiency. The time-frequency domain resources that can be allocated by the base station are the resources that can be used by the base station to transmit data within a specific time and frequency range.

It should be noted that, steps S11 and S12 are not executed in a fixed sequence; step S11 may be executed first, or step S12 may be executed first.

In an exemplary embodiment, step S13 comprises: determining a requirement for a block error rate during data transmission; and on the basis of the requirement of the block error rate and the time-frequency domain resources that can be allocated by the base station, determining the time-frequency domain resources according to the first time-frequency domain resources and the second time-frequency domain resources.

As an example, determining a requirement for a block error rate during data transmission includes: determining a requirement for a block error rate during data transmission according to a requirement for sensing accuracy.

It should be noted that the aforementioned "requirement for the block error rate during data transmission" is different from the "block error rate of data transmission" in the communication requirements. If only the block error rate of the communication requirements is considered, the block error rate is relatively high, for example, 10%; however, since the present disclosure requires the use of data reconstruction for sensing, and considering the sensing accuracy, the block error rate for data transmission needs to be lowered, for example, to 1% or 0.1%. Therefore, "determining a requirement for a block error rate during data transmission according to a requirement for sensing accuracy" actually rewrites and adjusts the block error rate.

It should be noted that, in the present embodiment, the base station determines the allocated time domain resources and frequency domain resources and the data transmission parameters only according to the channel quality and the communication requirements; secondly, the base station determines the allocated time domain resources and frequency domain resources only according to the channel quality and the sensing requirements; finally, comprehensively considering the allocable resources, the communication requirements, and the sensing requirements, the base station adjusts the allocated time domain resources, frequency domain resources, and data transmission parameters, and ultimately determines the allocated time domain resources and frequency domain resources, and the data transmission parameters.

For better understanding, this will be described below by way of example:
the base station determines, only according to the channel quality and the communication requirements, that the allocated time domain resources and frequency domain resources are OFDM symbols of 40 consecutive time slots in the time domain, and OFDM subcarriers of 50 MHz continuous bandwidth in the frequency domain; determines the modulation order and coding rate, and sets the scheduled Modulation and Coding Scheme (MCS) level to MCS = 18 (64-Quadrature Amplitude Modulation (QAM) modulation with a code rate of 0.8027). Secondly, the base station determines, only according to the channel quality and the sensing requirements, that the allocated time domain resources and frequency domain resources are OFDM symbols of 80 consecutive time slots in the time domain, and OFDM subcarriers of 100 MHz continuous bandwidth in the frequency domain. Finally, considering the allocable resources, the communication requirements, and the sensing requirements, the base station adjusts the resource allocation. To ensure the sensing accuracy, the data transmission BLER needs to be controlled to ≤1%, and accordingly, additional time frequency resources are allocated. The allocated time domain resources and frequency domain resources are determined as OFDM symbols of 90 consecutive time slots in the time domain and 100 MHz OFDM subcarriers continuous in the frequency domain. Furthermore, the modulation order and coding rate are adjusted. On the basis of the adjusted time-frequency resources and the communication requirements, the scheduled MCS level is set to MCS = 8 (16QAM modulation with a code rate of 0.5400).

It should be noted that the allocation of time domain resources and frequency domain resources based solely on sensing requirements is under the assumption that the sensing signal is completely accurate. However, in practice, the receiving end reconstructs the sensing signal using the data signal, while the parsing of the data signal has a certain bit error rate (a block error rate BLER ≤ 10% cannot guarantee the correctness of the reconstructed sensing signal). Therefore, to ensure sensing accuracy, the data transmission BLER needs be controlled to ≤1%, necessitating a corresponding increase in time frequency resources. Compared to the scenario where only communication requirements are considered, the allocated time domain and frequency domain resources have been increased, while the number of information bits required for data transmission remains unchanged. Therefore, the adjusted modulation order and code rate are lower than the MCS level used when only communication requirements were considered.

Step S204: allocation indication information for the time-frequency domain resource and the data transmission parameter is sent to the terminal; and a data signal which is sent by the terminal at a position of the time-frequency domain resource of the channel according to the data transmission parameters is acquired, the time-frequency domain resources comprising a position of the time-frequency domain resources.

It should be noted that, upon receiving the allocation indication information, the terminal sends the data signal at the corresponding time frequency resource position according to the data transmission parameters, the data signal including data symbols and pilot symbols.

Step S206: the data signal is reconstructed to obtain a sensing signal at the position of the time-frequency domain resource of the data signal, and the channel and an environment are sensed on the basis of the sensing signal.

It should be noted that, after receiving a data signal sent by a terminal, a base station parses the data signal to obtain a data information bit, reconstructs the data signal (including hard decision symbol or a coded and modulated data symbol, and a pilot symbol) in the parsing process as a sensing signal, and then the base station senses the channel and the environment according to the reconstructed sensing signal.

It should be noted that, in a broad sense, the sensing signal may also be referred to as a measurement signal, that is, a sending end sends a signal, and the value of the signal is known to a receiving end, so that the receiving end can measure, on the basis of the measurement signal, a channel environment experienced by the measurement signal.

In communication, a pilot symbol can also be considered as a measurement signal, and thus can also be considered as a sensing signal; and the pilot symbol is used for measuring a channel coefficient from a sending end to a receiving end.

During sensing, if continuous measurement signals can be configured in the time domain and the frequency domain, the receiving end may perform, on the basis of the sensing signals, sensing and identification on a reflector diffuser (a building, a tree, a vehicle, a pedestrian, an unmanned aerial vehicle, etc. ) that the sensing signals experience in a channel environment. In this way, the receiving end or the sending end (for example, the receiving end feeds back a sensing result to the sending end) may obtain information of a channel environment, enabling adjustment to the beam of the transmitted signal, monitoring of an unmanned aerial vehicle, scheduling of vehicles, and so on. In an exemplary embodiment, step S206 comprises: in cases where the channel quality satisfies a preset condition, reconstructing the data signal by means of modulation-based reconstruction, so as to obtain the sensing signal at the position of the time-frequency domain resource where the data signal is located; in cases where the channel quality does not satisfy the preset condition, reconstructing the data signal by means of decoding-based reconstruction, so as to obtain the sensing signal at the position of the time-frequency domain resource where the data signal is located.

It should be noted that a preset condition includes a CQI being greater than a preset threshold, i.e., if the channel quality meets the preset condition, it indicates that the channel quality is good.

It should be noted that the modulation-based reconstruction mode is applicable to scenarios with good channel quality, where the accuracy of hard decision is relatively high, that is, the hard-decided symbols obtained by means of hard decision are highly likely to be the original transmitted data symbols. Therefore, the accuracy of the reconstructed sensing signal is also high, and the accuracy of sensing is also high. Furthermore, in the modulation-based reconstruction mode, the sensing signals can be reconstructed at the time-domain and frequency-domain positions of all the data symbols, thereby ensuring the sampling density of the sensing signals at the time-domain and frequency-domain positions. However, the modulation-based reconstruction mode cannot ensure that all hard decisions are correct, and therefore, a reconstructed sensing signal cannot ensure that all the hard decisions are correct, which causes certain degradation of sensing performance.

It should be noted that, a decoding-based reconstruction mode is applicable to a scenario of general channel quality or poor channel quality. Because information bits with correct decoding and check results can ensure accuracy, the accuracy of a corresponding reconstructed sensing signal is also ensured, thereby ensuring sensing performance. However, for information bits with incorrect check results, the corresponding coded and modulated data symbols are set to zero, i.e. the corresponding sensing signal is zero, which is equivalent to discarding the sensing signal at the corresponding time-frequency domain positions, resulting in a certain loss of sensing accuracy.

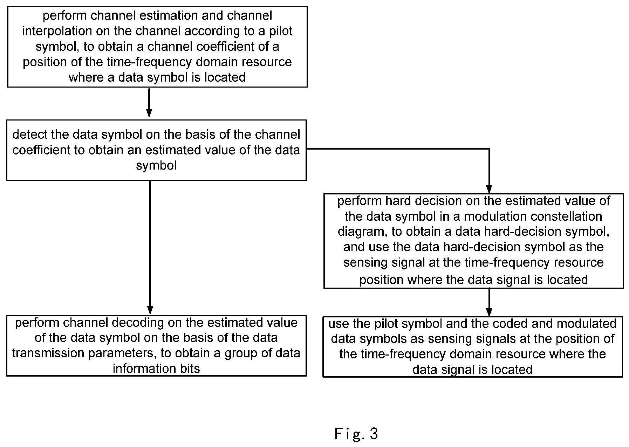

In an exemplary embodiment, the data signal is reconstructed in a modulation-based reconstruction mode to obtain the sensing signal at the position of the time-frequency domain resource where the data signal is located, which is specifically as shown in Fig. 3, and includes steps S21-S24 as follows:
step S21: channel estimation and channel interpolation are performed on the channel according to a pilot symbol, to obtain a channel coefficient of a position of the time-frequency domain resource where a data symbol is located.

It should be noted that the data signal includes a pilot symbol and a data symbol, and the time domain and frequency domain positions where the data signal is located are the time domain and frequency domain positions where the pilot symbol and the data symbol are located. The function of the pilot symbol is for the receiving end to perform channel estimation and channel interpolation to obtain the channel coefficients at the time-domain and frequency-domain positions of the data symbols, and then on the basis of an channel coefficient, detect the data symbol to obtain an estimated values of the data symbol.

Step S22: the data symbol is detected on the basis of the channel coefficient to obtain an estimated value of the data symbol.

It should be noted that after step S22, channel decoding may further be performed on the estimated value of the data symbol on the basis of the data transmission parameters, to obtain a group of data information bits.

Step S23: hard decision is performed on the estimated value of the data symbol in a modulation constellation diagram, to obtain a data hard-decision symbol.

It should be noted that performing hard decision on the estimated values of the data symbols in the modulation constellation diagram refers to, among standard constellation point symbols in the modulation constellation diagram, taking the value, corresponding to the constellation point symbol that has the shortest Euclidean distance to the estimated value of the data symbol, as a hard-decision value of the estimated value of the data symbol, which is the data hard-decision symbol.

Step S24: the pilot symbol and the data hard-decision symbol are used as the sensing signal at the time-frequency resource position where the data signal is located.

It should be noted that the data hard-decision symbol is used as a sensing signal of a position of the time-frequency domain resource where the data symbol is located, and the pilot symbol is used as a sensing signal of a position of the time-frequency domain resource where the pilot symbol is located. Since the data signal comprises a data symbol and a pilot symbol, the pilot symbol and the data hard-decision symbol can be used as a sensing signal of a position of the time-frequency domain resource where the data signal is located.

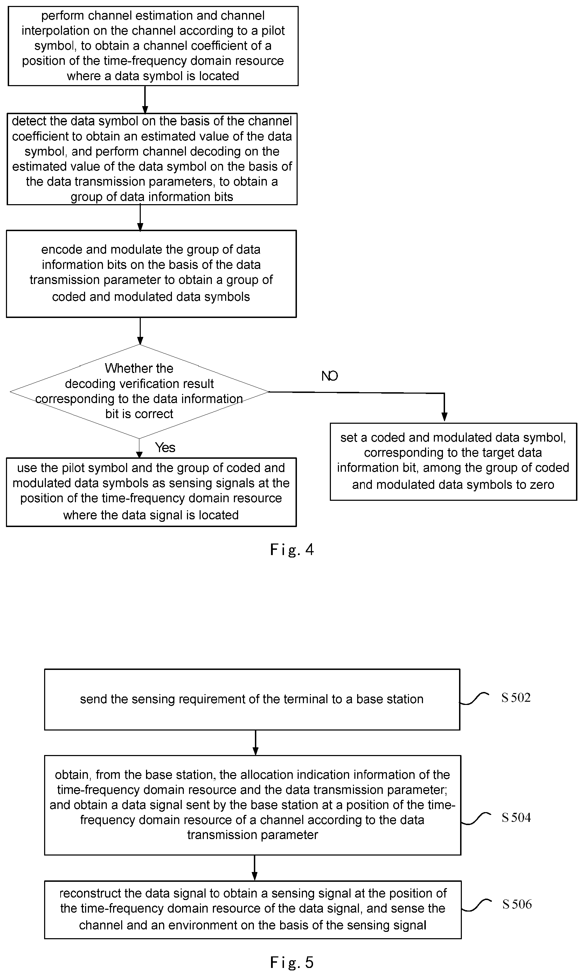

In an exemplary embodiment, the data signal is reconstructed in a decoding-based reconstruction mode to obtain the sensing signal at the position of the time-frequency domain resource where the data signal is located, which is specifically as shown in Fig. 4, and includes steps S31-S36 as follows:
step S31: channel estimation and channel interpolation are performed on the channel according to a pilot symbol, to obtain a channel coefficient of a position of the time-frequency domain resource where a data symbol is located, the data signal comprising the pilot symbol and the data symbol;
step S32: the data symbol is detected on the basis of the channel coefficient to obtain an estimated value of the data symbol;
step S33: channel decoding is performed on the estimated value of the data symbol on the basis of the data transmission parameters, to obtain a group of data information bits;
step S34: the group of data information bits is coded and modulated on the basis of the data transmission parameters to obtain a group of coded and modulated data symbols, the data transmission parameters comprising a modulation order and a code rate;
step S35: a coded and modulated data symbol, corresponding to the target data information bit, among the group of coded and modulated data symbols is set to zero, wherein the target data information bit is a data information bit with a channel decoding error among the group of data information bits; and
step S36: the pilot symbol and the group of coded and modulated data symbols are used as sensing signals at the position of the time-frequency domain resource where the data signal is located.

As an example, a channel decoding check result of each data information bit among a group of data information bits may also be determined. If a channel decoding check result is correct, the data information bits are coded and modulated on the basis of the data transmission parameters to obtain a coded and modulated data symbol at a corresponding data symbol position, and the coded and modulated data symbol is used as a sensing signal at a position of the time-frequency domain resource where the data symbol is located. If the channel decoding check result is incorrect, the coded and modulated data symbol corresponding to the data information bit is set to zero on the basis of the data transmission parameters, to serve as the sensing signal at the time-frequency resource position where the data symbol is located.

It should be noted that, when performing channel coding on the data information bits, the sending end first performs a binary operation on the data information bits to obtain a group of cyclic redundancy check bits; the receiving end performs the cyclic redundancy check bit check on the data information bit obtained by performing channel decoding, if the group of bits of the cyclic redundancy check bits is all 0s, it is considered that data information bits obtained by decoding are correct, otherwise, they are incorrect. It should be noted that the standard protocol also specifies the number of CRC bits.

It should be noted that a group of coded and modulated symbols is used as a sensing signal of a position of the time-frequency domain resource where the data symbol is located, and the pilot symbol is used as a sensing signal of a position of the time-frequency domain resource where the pilot symbol is located. Since the data signal comprises a data symbol and a pilot symbol, the pilot symbol and a group of coded and modulated symbols can be used as a sensing signal of a position of the time-frequency domain resource where the data signal is located.

By means of steps S202 to S206, the base station side adjusts the time-frequency domain resources and data transmission parameters for data signal transmission during scheduling on the basis of the channel quality of the channel, the communication requirements of the terminal, and the sensing requirements of the base station; upon receiving the data signal transmitted by the terminal side on the position of the time-frequency domain resources according to the data transmission parameters, the base station side reconstructs the data signal as a sensing signal; then, on the basis of the reconstructed sensing signal, the base station side senses the channel and the environment, thereby achieving the integration of sensing and communication with the assistance of communication data for sensing, which solves the issue of being unable to achieve the integration of sensing and communication with the assistance of communication data for sensing.

The present embodiment provides a method for determining a sensing signal operating on a terminal, which is applied to a operation mode of terminal receiving and base station transmitting. Fig. 5 is a flowchart of another method for determining a sensing signal according to an embodiment of the present disclosure. As shown in Fig. 5, the flow comprises steps S502-S506 as follows:
step S502: sensing requirements of the terminal are sent to a base station;
step S504: allocation indication information sent by the base station and comprising time-frequency domain resources and data transmission parameters is acquired; and a data signal sent by the base station at a position of the time-frequency domain resource of a channel according to the data transmission parameters is acquired, wherein the time-frequency domain resources and the data transmission parameters are resources and parameters determined by the base station according to the channel quality of the channel, communication requirements of the base station and sensing requirements of the terminal, the time-frequency domain resources comprising time domain resources and frequency domain resources; and the time-frequency domain resources comprising a position of the time-frequency domain resources.

As an example, the communication requirements include: the number of bits of data information and a BLER of data transmission; the sensing requirements comprise: sensing parameter accuracy and sensing accuracy; and the sensing parameter accuracy comprises: a maximum sensing distance and a sensing distance resolution, a maximum sensing speed and a sensing speed resolution. The data transmission parameters include a modulation order and a coding rate.

In an exemplary embodiment, before step S504, the method further includes: obtaining a channel measurement signal sent by the base station; and determining a channel quality of the channel according to the channel measurement signal; and sending the channel quality of the channel to the base station.

Step S506: the data signal is reconstructed to obtain a sensing signal at the position of the time-frequency domain resource of the data signal, and the channel and an environment are sensed on the basis of the sensing signal.

In an exemplary embodiment, step S506 comprises: in cases where the channel quality satisfies a preset condition, reconstructing the data signal by means of modulation-based reconstruction, so as to obtain the sensing signal at the position of the time-frequency domain resource where the data signal is located; in cases where the channel quality does not satisfy the preset condition, reconstructing the data signal by means of decoding-based reconstruction, so as to obtain the sensing signal at the position of the time-frequency domain resource where the data signal is located.

In an exemplary embodiment, reconstructing the data signal by means of modulation-based reconstruction, so as to obtain the sensing signal at the position of the time-frequency domain resource where the data signal is located, comprises: performing channel estimation and channel interpolation on the channel according to a pilot symbol, to obtain a channel coefficient of a position of the time-frequency domain resource where a data symbol is located, the data signal comprising the pilot symbol and the data symbol; detecting the data symbol on the basis of the channel coefficient to obtain an estimated value of the data symbol; performing hard decision on the estimated value of the data symbol in a modulation constellation diagram, to obtain a data hard-decision symbol; and using the pilot symbol and the data hard-decision symbol as the sensing signal at the time-frequency resource position where the data signal is located.

In an exemplary embodiment, reconstructing the data signal by means of decoding-based reconstruction, so as to obtain the sensing signal at the position of the time-frequency domain resource where the data signal is located, comprises: performing channel estimation and channel interpolation on the channel according to a pilot symbol, to obtain a channel coefficient of a position of the time-frequency domain resource where a data symbol is located, the data signal comprising the pilot symbol and the data symbol; detecting the data symbol on the basis of the channel coefficient to obtain an estimated value of the data symbol; performing channel decoding on the estimated value of the data symbol on the basis of the data transmission parameters, to obtain a group of data information bits; coding and modulating the group of data information bits on the basis of the data transmission parameters to obtain a group of coded and modulated data symbols, the data transmission parameters comprising a modulation order and a code rate; setting a coded and modulated data symbol, corresponding to the target data information bit, among the group of coded and modulated data symbols to zero, wherein the target data information bit is a data information bit with a channel decoding error among the group of data information bits; and using the pilot symbol and the group of coded and modulated data symbols as sensing signals at the position of the time-frequency domain resource where the data signal is located.

By means of steps S502 to S506 described above, the terminal side feeds back its own sensing requirements to the base station side, and acquires the data signal transmission parameters and time-frequency domain resources determined by the base station side on the basis of the channel quality of the channel, the sensing requirements of the terminal, and the communication requirements of the base station; upon receiving the data signal transmitted by the base station at the corresponding position of the time-frequency domain resource according to the data transmission parameters, the terminal side reconstructs the data signal as a sensing signal; then, on the basis of the reconstructed sensing signal, the terminal side senses the channel and the environment, thereby achieving the integration of sensing and communication with the assistance of communication data for sensing, which solves the issue of being unable to achieve the integration of sensing and communication with the assistance of communication data for sensing.

It should be noted that the present disclosure relates to two entities: a base station and a terminal. In practical deployment, the base station may be a macro station of a cellular network, and may also be a distributed unit access node, etc. The terminal may be a handheld mobile device or a vehicle-mounted communication module.

It should be noted that the present disclosure is applied to integrated sensing and communication scenarios. By adjusting the modulation and coding level of the transmitted data and adjusting the allocated time-domain and frequency-domain resources, the present disclosure achieves the integration of sensing and communication with the assistance of communication data for sensing, respectively under two operation modes: terminal-to-base station transmission and base station-to-terminal transmission. The solution of the present disclosure not only ensures the communication transmission rate and reliability, but also ensures the precision and accuracy of the sensing parameters.

It should be noted that the present disclosure is applicable not only to the two operation modes of base station-to-terminal transmission and terminal-to-base station transmission, but also to base station-to-base station transmission scenarios (such as wireless backhaul between base stations) and terminal-to-terminal transmission scenarios (such as communication between vehicle-mounted terminals).

Obviously, the embodiments as described are only some of the embodiments of the present application, and are not all of the embodiments of the present application. In order to better understand the method, the described process will be described below in conjunction with the embodiments, but is not limited to the technical solutions of the embodiments of the present application. Specially:
In the integrated sensing and communication scenario of the present disclosure (specifically, with the assistance of communication data for sensing), two operation modes are primarily involved: terminal-to-base station transmission and base station-to-terminal transmission, specifically:
Operation mode 1: terminal-to-base station transmission:
   Step one: a terminal sends a channel measurement signal to a base station; the base station obtains channel quality according to the measurement signal; the terminal sends communication requirements to the base station; and the base station itself generates sensing requirements.
   Step two: first, only according to the channel quality and the communication requirements, the base station determines the allocated time-domain resources and frequency-domain resources, modulation order, and coding rate; secondly, the base station determines the allocated time domain resources and frequency domain resources only according to the channel quality and the sensing requirements; finally, comprehensively considering the allocable resources, the communication requirements, and the sensing requirements, the base station adjusts the allocated resources, and data transmission parameters, and ultimately determines the allocated time domain resources and frequency domain resources, the modulation order, and the coding rate. The base station sends, to the terminal, the allocation indication information comprising the time-frequency domain resources and the data transmission parameters; and upon receiving the indication, the terminal sends a data signal at a corresponding position of the time-frequency domain resource, the data signal comprising a data symbol and a pilot symbol.
   Step three: after receiving a data signal sent by a terminal, a base station parses the data signal to obtain a data information bit, reconstructs the data signal (including hard decision symbol or a coded and modulated data symbol, and a pilot symbol) in the parsing process as a sensing signal at allocated time-domain and frequency-domain resource positions, and then the base station senses the channel and the environment according to the reconstructed sensing signal.
Operation mode 2: base station-to-terminal transmission:
   Step one: a base station sends a channel measurement signal to a terminal; the terminal acquires channel quality according to the channel measurement signal and feeds back same to the base station; the terminal sends sensing requirements to the base station; and the base station itself generates communication requirements.
   Step two: only according to the channel quality and the communication requirements, the base station determines the allocated time-domain resources and frequency-domain resources, modulation order, and coding rate; the base station determines the allocated time domain resources and frequency domain resources only according to the channel quality and the sensing requirements; comprehensively considering the allocable resources, the communication requirements, and the sensing requirements, the base station adjusts the allocated resources, and data transmission parameters, and ultimately determines the allocated time domain resources and frequency domain resources, the modulation order, and the coding rate. The base station sends, to the terminal, the allocation indication information comprising the time-frequency domain resources and the data transmission parameters; and the terminal sends a data signal at a corresponding position of the time-frequency domain resource, the data signal comprising a data symbol and a pilot symbol.
   Step three: after receiving a data signal, a terminal side parses the data signal to obtain a data information bit, reconstructs the data signal (including hard decision symbol or a coded and modulated data symbol, and a pilot symbol) in the parsing process as a sensing signal at allocated time-domain and frequency-domain resource positions, and then the terminal side senses the channel and the environment according to the reconstructed sensing signal. It should be noted that, the reconstruction of the data signal by the receiving end includes two modes: a modulation-based reconstruction mode and a decoding-based reconstruction mode, specifically:
      Modulation-based reconstruction mode:
         step one: channel estimation is performed according to pilot symbols, and channel coefficients of time-domain and frequency-domain positions of data symbols are obtained by means of channel interpolation. The data symbol is detected on the basis of the channel coefficient to obtain an estimated value of the data symbol. Channel decoding is performed on the estimated value of the data symbol on the basis of the data transmission parameters, and the estimated value is parsed to obtain data information bits.
         Step two: hard decision is made on the estimated value of the data symbol in a modulation constellation diagram, and the data hard-decision symbol after hard decision is taken as a sensing signal at a position of the time-frequency domain resource where the data symbol is located.
         Step three: the pilot symbols and the data hard-decision symbols are taken as the sensing signals at the allocated time-domain and frequency-domain resource positions, and then the channel and the environment are sensed.
      Decoding-based reconstruction mode:
         step one: channel estimation is performed according to pilot symbols, and channel coefficients of time-domain and frequency-domain positions of data symbols are obtained by means of channel interpolation. The data symbol is detected on the basis of the channel coefficient to obtain an estimated value of the data symbol. Channel decoding is performed on the estimated value of the data symbol on the basis of the data transmission parameters, and the estimated value is parsed to obtain a group of data information bits.
         Step two: if a channel decoding check result of a data information bit in a group of data information bits is correct, the data information bits are coded and modulated on the basis of the data transmission parameters to obtain a coded and modulated data symbol at a corresponding data symbol position, and the coded and modulated data symbol is used as a sensing signal at a position of the time-frequency domain resource where the data symbol is located.
         Step three: if a channel decoding check result of a data information bit in a group of data information bits is incorrect, the coded and modulated data symbol corresponding to the data information bit is set to zero on the basis of the data transmission parameters, to serve as the sensing signal at the time-frequency resource position where the data symbol is located.
         Step four: a pilot symbol and a group of coded and modulated data symbols corresponding to the group of data information bits are used as the sensing signals at the allocated time-domain and frequency-domain resource positions, and then the channel and the environment are sensed.

It should be noted that the value of the pilot symbol is known to the receiving end; and after the pilot position of the receiving end performs conjugate calculation on the pilot symbol value of the received signal, the channel information of the corresponding position can be obtained. Similarly, the coded and modulated symbols obtained by means of decoding-based reconstruction can also be considered as pilot symbols with known symbol values; upon performing conjugate calculation of the coded and modulated symbol values on the received signal at the data positions at the receiving end, the channel information at the corresponding positions can be obtained. In this way, by using the pilot symbols and the coded and modulated symbols as sensing signals, the base station can obtain the channel and environment information at the corresponding time-domain and frequency-domain positions.

For better understanding, the following description is given with reference to specific embodiments: Embodiment 1: terminal-to-base station transmission mode, and decoding-based reconstruction mode:
Step S1: a terminal sends a channel measurement signal to a base station, and the base station obtains, according to the measurement signal, a channel quality CQI with an SNR of 20 dB. The terminal sends communication requirements to the base station, including the number of data information bits and the accuracy (BLER ≤ 10%). The base station generates its own sensing requirements, including sensing parameter accuracy (maximum sensing distance and sensing distance resolution, maximum sensing speed and sensing speed granularity, etc.), as well as sensing accuracy (the estimated minimum mean square error (MMSE) ≤ -30 dB).
Step S2: first, the base station determines, only according to the channel quality and the communication requirements, that the allocated time domain resources and frequency domain resources are OFDM symbols of 40 consecutive time slots in the time domain and 50 MHz bandwidth of consecutive OFDM subcarriers in the frequency domain, determines the modulation order and coding rate, and sets the scheduled MCS level = 18 (64-QAM modulation with a code rate of 0.8027). Secondly, the base station determines, only according to the channel quality and the sensing requirements, that the allocated time domain resources and frequency domain resources are OFDM symbols of 80 consecutive time slots in the time domain and OFDM subcarriers of 100 MHz continuous bandwidth in the frequency domain. Finally, considering the allocable resources, the communication requirements, and the sensing requirements, the base station adjusts the resource allocation. To ensure the sensing accuracy, the data transmission BLER needs to be controlled to ≤1%, and accordingly, additional time frequency resources are allocated. The allocated time domain resources and frequency domain resources are determined as OFDM symbols of 90 consecutive time slots in the time domain and 100 MHz OFDM subcarriers continuous in the frequency domain. Furthermore, the modulation order and coding rate are adjusted. On the basis of the adjusted time-frequency resources and the communication requirements, the scheduled MCS level is set to MCS = 8 (16QAM modulation with a code rate of 0.5400). The base station sends, to the terminal, the allocation indication information comprising the time-frequency domain resources and the data transmission parameters; and upon receiving the indication, the terminal sends a data signal at a corresponding position of the time-frequency domain resource, the data signal comprising a data symbol and a pilot symbol.
Step S3: after receiving the data signal sent by the terminal, the base station parses the data signal to obtain data information bits; the base station reconstructs, as a sensing signal, the data signal in the parsing process by means of decoding-based reconstruction; and then the base station senses a channel and an environment according to the reconstructed sensing signal.

Specifically, step S3 comprises steps S31-S33 as follows:
Step S31: the base station performs channel estimation according to pilot symbols, and obtains channel coefficients of time-domain and frequency-domain positions of data symbols by means of channel interpolation. The data symbol is detected on the basis of the channel coefficient to obtain an estimated value of the data symbol. Channel decoding is performed on the estimated value of the data symbol on the basis of the data transmission parameters, and the estimated value is parsed to obtain data information bits.
Step S32: if decoding and checking results of all the data signal channels are correct, the base station codes and modulates the data information bits on the basis of the data transmission parameters to obtain a coded and modulated data symbol at a corresponding data symbol position, and uses the coded and modulated data symbol a sensing signal at a position of the time-frequency domain resource where the data symbol is located.
Step S33: the base station uses the pilot symbols and the coded and modulated data symbols as sensing signals on the allocated time-domain and frequency-domain resource positions (i.e., OFDM symbols of 90 consecutive time slots in the time domain and OFDM subcarriers of 100 MHz continuous bandwidth in the frequency domain), and then senses the channel and the environment.

Embodiment 2: base station-to-terminal transmission mode, and modulation-based reconstruction mode:
Step S1: a base station sends a channel measurement signal to a terminal; the terminal obtains a channel quality CQI of 25 dB according to the channel measurement signal and feeds same back to the base station. The terminal sends to the base station sensing requirements, including sensing parameter accuracy (maximum sensing distance and sensing distance resolution, maximum sensing speed and sensing speed granularity, etc.), as well as sensing accuracy (the estimated MMSE ≤ -40 dB). The base station itself generates communication requirements to the base station, including the number of information bits and the accuracy (BLER ≤ 10%).
Step S2: first, the base station determines, only according to the channel quality and the communication requirements, that the allocated time domain resources and frequency domain resources are OFDM symbols of 100 consecutive time slots in the time domain and OFDM subcarriers of 150 MHz continuous bandwidth in the frequency domain, determines the modulation order and coding rate, and sets the scheduled level to MCS = 26 (256-QAM modulation with a code rate of 0.8950). Secondly, the base station determines, only according to the channel quality and the sensing requirements, that the allocated time domain resources and frequency domain resources are OFDM symbols of 60 consecutive time slots in the time domain and OFDM subcarriers of 100 MHz continuous bandwidth in the frequency domain. Finally, considering the allocable resources, the communication requirements, and the sensing requirements, the base station adjusts the resource allocation. To ensure the sensing accuracy, the data transmission BLER needs to be controlled to ≤1%, and accordingly, additional time frequency resources are allocated. The allocated time domain resources and frequency domain resources are determined as OFDM symbols of 200 consecutive time slots in the time domain and OFDM subcarriers 200 MHz continuous bandwidth in the frequency domain. Furthermore, the modulation order and coding rate are adjusted. On the basis of the adjusted time-frequency resources and the communication requirements, the scheduled MCS level is set to MCS = 16 (64QAM modulation with a code rate of 0.7021). The base station sends, to the terminal, the allocation indication information comprising the time-frequency domain resources and the data transmission parameters; and the terminal sends a data signal at a corresponding position of the time-frequency domain resource, the data signal comprising a data symbol and a pilot symbol.
Step S3: after receiving the data signal sent by the base station, the terminal performs parsing to obtain data information bits; the terminal reconstructs, as a sensing signal, the data signal in the parsing process by means of modulation-based reconstruction; and then the terminal senses a channel and an environment according to the reconstructed sensing signal.

Specifically, step S3 comprises steps S31-S33 as follows:
Step S31: the terminal performs channel estimation according to pilot symbols, and obtains channel coefficients of time-domain and frequency-domain positions of data symbols by means of channel interpolation. The data symbol is detected on the basis of the channel coefficient to obtain an estimated value of the data symbol. Channel decoding is performed on the estimated value of the data symbol on the basis of the data transmission parameters, and the estimated value is parsed to obtain data information bits.
Step S32: hard decision is made on the estimated value of the data symbol in a constellation diagram, and the data hard-decision symbol after hard decision is taken as a sensing signal at a position of the time-frequency domain resource where the data symbol is located.
Step S33: the terminal uses the pilot symbols and the data hard-decision symbols as sensing signals on the allocated time-domain and frequency-domain resource positions (i.e., OFDM symbols of 200 consecutive time slots in the time domain and OFDM subcarriers of 200 MHz continuous bandwidth in the frequency domain), and then senses the channel and the environment.

Embodiment 3: terminal-to-base station transmission mode, and decoding-based reconstruction mode:
Step S1: a terminal sends a channel measurement signal to a base station, and the base station obtains, according to the measurement signal, a channel quality CQI with an SNR of 5 dB. The terminal sends communication requirements to the base station, including the number of information bits and the accuracy (BLER ≤ 10%). The base station itself generates sensing requirements, including sensing parameter accuracy (maximum sensing distance and sensing distance resolution, maximum sensing speed and sensing speed granularity, etc.), as well as sensing accuracy (the estimated MMSE ≤ -30 dB).
Step S2: first, the base station determines, only according to the channel quality and the communication requirements, that the allocated time domain resources and frequency domain resources are OFDM symbols of 100 consecutive time slots in the time domain and OFDM subcarriers of 100 MHz continuous bandwidth in the frequency domain, determines the modulation order and coding rate, and sets the scheduled level to MCS = 6 (16-QAM modulation with a code rate of 0.4238). Secondly, the base station determines, only according to the channel quality and the sensing requirements, that the allocated time domain resources and frequency domain resources are OFDM symbols of 120 consecutive time slots in the time domain and OFDM subcarriers of 150 MHz continuous bandwidth in the frequency domain. Finally, considering the allocable resources, the communication requirements, and the sensing requirements, the base station adjusts the resource allocation. To ensure the sensing accuracy, the data transmission BLER needs to be controlled to ≤1%. However, due to limited system resources, the allocated time-domain and frequency-domain resources are determined to be OFDM symbols of 100 consecutive time slots in the time domain and OFDM subcarriers of 100 MHz continuous bandwidth in the frequency domain, with no further resources available. As a result, the modulation order and coding rate are determined to be the same as that when only considering communication requirements, i.e., the scheduled MCS level is MCS = 6 (16QAM modulation with a code rate of 0.4238). Under such resource allocation scheme and transmission parameter configuration, the data transmission accuracy requirement can be met, but the sensing accuracy requirement may not be satisfied. The base station sends, to the terminal, the allocation indication information comprising the time-frequency domain resources and the data transmission parameters; and upon receiving the indication, the terminal sends a data signal at a corresponding position of the time-frequency domain resource, the data signal comprising a data symbol and a pilot symbol.
Step S3: after receiving the data signal sent by the terminal, the base station parses the data signal to obtain data information bits; the base station reconstructs, as a sensing signal, the data signal in the parsing process by means of decoding-based reconstruction; and then the base station senses a channel and an environment according to the reconstructed sensing signal.

Specifically, step S3 comprises steps S31-S33 as follows:
Step S31: the base station performs channel estimation according to pilot symbols, and obtains channel coefficients of time-domain and frequency-domain positions of data symbols by means of channel interpolation. The data symbol is detected on the basis of the channel coefficient to obtain an estimated value of the data symbol. Channel decoding is performed on the estimated value of the data symbol on the basis of the data transmission parameters, and the estimated value is parsed to obtain data information bits.
Step S32: if only some of the channel decoding check results of all data signals are correct, the base station codes and modulates all data information bits on the basis of the data transmission parameters to obtain the coded and modulated symbols at the corresponding data symbol positions. Meanwhile, for those data information bits with incorrect check results, the corresponding coded and modulated symbols after encoding and modulation are set to zero. The base station then uses these coded and modulated symbols as the sensing signals at the position of the time-frequency domain resources where the data symbols are located.
Step S33: the base station uses the pilot symbols and the coded and modulated data symbols as sensing signals on the allocated time-domain and frequency-domain resource positions (i.e., OFDM symbols of 100 consecutive time slots in the time domain, and OFDM subcarriers of 100 MHz continuous bandwidth in the frequency domain), and then senses the channel and the environment.

Embodiment 4: base station-to-terminal transmission mode, and modulation-based reconstruction mode:
Step S1: a base station sends a channel measurement signal to a terminal; the terminal obtains a channel quality CQI of 25 dB according to the channel measurement signal and feeds same back to the base station. The terminal sends to the base station sensing requirements, including sensing parameter accuracy (maximum sensing distance and sensing distance resolution, maximum sensing speed and sensing speed granularity, etc.), as well as sensing accuracy (the estimated MMSE ≤ -40 dB). The base station itself generates communication requirements to the base station, including the number of information bits and the accuracy (BLER ≤ 10%).
Step S2: first, the base station determines, only according to the channel quality and the communication requirements, that the allocated time domain resources and frequency domain resources are OFDM symbols of 100 consecutive time slots in the time domain and OFDM subcarriers of 150 MHz continuous bandwidth in the frequency domain, determines the modulation order and coding rate, and sets the scheduled level to MCS = 26 (256-QAM modulation with a code rate of 0.8950). Secondly, the base station determines, only according to the channel quality and the sensing requirements, that the allocated time domain resources and frequency domain resources are OFDM symbols of 60 consecutive time slots in the time domain and OFDM subcarriers of 100 MHz continuous bandwidth in the frequency domain. Finally, considering the allocable resources, the communication requirements, and the sensing requirements, the base station adjusts the resource allocation. To ensure the sensing accuracy, the data transmission BLER needs to be controlled to ≤1%. However, due to limited system resources, the allocated time-domain and frequency-domain resources are determined to be OFDM symbols of 80 consecutive time slots in the time domain and OFDM subcarriers of 100 MHz continuous bandwidth in the frequency domain. Meanwhile, in order to ensure sensing accuracy as much as possible, it is necessary to reduce the data transmission rate to control the BLER to ≤ 1%. Accordingly, the modulation order and coding rate are adjusted, and on the basis of the adjusted time-frequency domain resources and the communication requirements, the scheduled MCS level is adjusted to MCS = 8 (16QAM modulation with a code rate of 0.5400). With such resource allocation scheme and transmission parameter configuration, the requirements for sensing accuracy and data transmission accuracy can both be fulfilled, but the data transmission rate requirement cannot be met. The base station sends, to the terminal, the allocation indication information comprising the time-frequency domain resources and the data transmission parameters; and the terminal sends a data signal at a corresponding position of the time-frequency domain resource, the data signal comprising a data symbol and a pilot symbol.
Step S3: after receiving the data signal sent by the base station, the terminal performs parsing to obtain data information bits; the terminal reconstructs, as a sensing signal, the data signal in the parsing process by means of modulation-based reconstruction; and then the terminal senses a channel and an environment according to the reconstructed sensing signal.

Specifically, step S3 comprises steps S31-S33 as follows:
Step S31: the terminal performs channel estimation according to pilot symbols, and obtains channel coefficients of time-domain and frequency-domain positions of data symbols by means of channel interpolation. The data symbol is detected on the basis of the channel coefficient to obtain an estimated value of the data symbol. Channel decoding is performed on the estimated value of the data symbol on the basis of the data transmission parameters, and the estimated value is parsed to obtain data information bits.
Step S32: hard decision is made on the estimated value of the data symbol in a constellation diagram, and the data hard-decision symbol after hard decision is taken as a sensing signal at a position of the time-frequency domain resource where the data symbol is located.
Step S33: the terminal side uses the pilot symbols and the data hard-decision symbols as sensing signals on the allocated time-domain and frequency-domain resource positions (i.e., OFDM symbols of 80 consecutive time slots in the time domain and OFDM subcarriers of 100 MHz continuous bandwidth in the frequency domain), and then senses the channel and the environment. It should be noted that the present disclosure is applied to integrated sensing and communication scenarios. The technical solutions of the present disclosure achieve the following technical effects: 1) in the current communication scenarios of terminal-to-base station transmission and base station-to-terminal transmission operation modes, the integration of sensing and communication is realized; 2) with the assistance of communication data for sensing, there is no major change to the signal frame structure involved in current communication protocols, and there is no need to additionally transmit sensing signals, which facilitates the evolution and commercial deployment of integrated sensing and communication in the industry; 3) by utilizing time-domain resources and computational resources, the goals of communication and sensing are achieved, which also reflects the trade-off between communication and sensing performance under given channel quality conditions, thereby effectively putting the theory of integrated sensing and communication into practice.

It should be noted that, for integrated sensing and communication schemes, instead of using the OFDM signal waveform employed in current 5G NR, a Frequency Modulated Continuous Wave (FMCW) waveform or an Orthogonal Time Frequency Space (OTFS) waveform, which are both used in the radar field, may also be adopted, while simultaneously carrying some communication information. In this way, the receiving end may also implement communication information acquisition and channel environment sensing.

It should be noted that both FMCW and OTFS are sensing-centric waveforms. To achieve integrated sensing and communication, the sending end modulates information onto the phase of the FMCW waveform, as well as onto the delay-Doppler domain of the OTFS waveform. The receiving end directly performs sensing on the received signal and can also obtain data information by performing linear transformation on the received signal to parse it in the corresponding transform domain. The amount of information that can be modulated by these two waveforms is much smaller compared to OFDM, and therefore they are less commonly used in the communication field.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

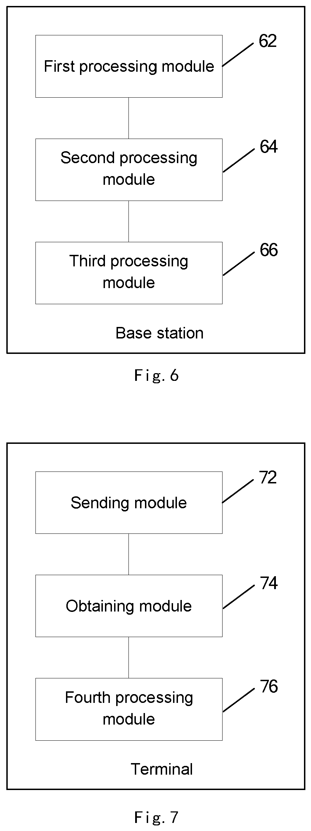

The present embodiment further provides a base station, which is used for implementing the described embodiments and exemplary embodiments. Fig. 6 is a structural block diagram of a base station according to an embodiment of the present disclosure. As shown in Fig. 6, the base station comprises:
a first processing module 62, configured to determine time-frequency domain resources and data transmission parameters according to a channel quality of a channel, communication requirements of a terminal, and sensing requirements of a base station, wherein the time-frequency domain resources comprise time domain resources and frequency domain resources;
a second processing module 64, configured to send, to the terminal, allocation indication information for the time-frequency domain resource and the data transmission parameter, and acquire a data signal which is sent by the terminal at a position of the time-frequency domain resource of the channel according to the data transmission parameters; and
a third processing module 66, configured to reconstruct the data signal to obtain a sensing signal at the position of the time-frequency domain resource of the data signal, and sense the channel and an environment on the basis of the sensing signal.

The base station adjusts the time-frequency domain resources and data transmission parameters for data signal transmission during scheduling on the basis of the channel quality of the channel, the communication requirements of the terminal, and the sensing requirements of the base station; upon receiving the data signal transmitted by the terminal side on the position of the time-frequency domain resources according to the data transmission parameters, the base station side reconstructs the data signal as a sensing signal; then, on the basis of the reconstructed sensing signal, the base station side senses the channel and the environment, thereby achieving the integration of sensing and communication with the assistance of communication data for sensing, which solves the issue of being unable to achieve the integration of sensing and communication with the assistance of communication data for sensing.

The present embodiment further provides a terminal. The terminal is used for implementing the described embodiments and exemplary embodiments. Fig. 7 is a structural block diagram of a terminal according to an embodiment of the present disclosure. As shown in Fig. 7, the terminal comprises:
a sending module 72, configured to send sensing requirements of the terminal to a base station;
an acquisition module 74, configured to acquire allocation indication information sent by the base station and comprising time-frequency domain resources and data transmission parameters; and acquire a data signal sent by the base station at a position of the time-frequency domain resource of a channel according to the data transmission parameters, wherein the time-frequency domain resources and the data transmission parameters are resources and parameters determined by the base station according to the channel quality of the channel, communication requirements of the base station and sensing requirements of the terminal, the time-frequency domain resources comprising time domain resources and frequency domain resources, and the time-frequency domain resources comprising a position of the time-frequency domain resources.
a fourth processing module 76, configured to reconstruct the data signal to obtain a sensing signal at the position of the time-frequency domain resource of the data signal, and sense the channel and an environment on the basis of the sensing signal.

The terminal feeds back its own sensing requirements to the base station side, and acquires the data signal transmission parameters and time-frequency domain resources determined by the base station side on the basis of the channel quality of the channel, the sensing requirements of the terminal, and the communication requirements of the base station; upon receiving the data signal transmitted by the base station at the corresponding position of the time-frequency domain resource according to the data transmission parameters, the terminal side reconstructs the data signal as a sensing signal; then, on the basis of the reconstructed sensing signal, the terminal side senses the channel and the environment, thereby achieving the integration of sensing and communication with the assistance of communication data for sensing, which solves the issue of being unable to achieve the integration of sensing and communication with the assistance of communication data for sensing.

It should be noted that the modules above may be implemented by software or hardware, and the latter may be implemented in the following manner, but is not limited thereto. All the modules above are located in the same processor; or all the modules above are located in different processors in any arbitrary combination manner.

To facilitate understanding of the technical solutions provided in the present disclosure, hereinafter, it will be described in detail in combination with the embodiments of the specific scenario.

The embodiments of the present disclosure further provide a computer readable storage medium storing a computer program, wherein the computer program is configured to execute, when running, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic apparatus, including a memory and a processor; the memory stores a computer program, and the processor is configured to run the computer program, so as to execute the operations in any one of the method embodiments.

In an exemplary embodiment, the electronic device can further comprise a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

Obviously, those skilled in the art should understand that the modules or steps in some embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the present disclosure is not limited to any specific hardware and software combinations.

The content above only relates to exemplary embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A method for determining a sensing signal, performed by a base station, and comprising:
determining a time-frequency domain resource and a data transmission parameter according to channel quality of a channel, a communication requirement of a terminal, and a sensing requirement of the base station, wherein the time-frequency domain resource comprises a time domain resource and a frequency domain resource;
sending, to the terminal, allocation indication information of the time-frequency domain resource and the data transmission parameter, and obtaining a data signal which is sent by the terminal at a position of the time-frequency domain resource of the channel according to the data transmission parameter; and
reconstructing the data signal to obtain a sensing signal at the position of the time-frequency domain resource of the data signal, and sensing the channel and an environment based on the sensing signal.

2. The method according to claim 1, wherein before determining the time-frequency domain resource and the data transmission parameter according to the channel quality of the channel, the communication requirement of the terminal, and the sensing requirement of the base station, the method further comprises:
obtaining a channel measurement signal sent by the terminal; and
determining the channel quality of the channel according to the channel measurement signal.

3. The method according to claim 1, wherein the determining time-frequency domain resource and the data transmission parameter according to channel quality of the channel, the communication requirement of the terminal, and the sensing requirement of the base station, comprises:
determining a first time-frequency domain resource and a first data transmission parameter according to the channel quality of the channel and the communication requirement of the terminal;
determining a second time-frequency domain resource according to the channel quality of the channel and the sensing requirement of the base station; and
on the basis of time-frequency domain resources that can be allocated by the base station, determining the time-frequency domain resource according to the first time-frequency domain resource and the second time-frequency domain resource, and adjusting the first data transmission parameter on the basis of the time-frequency domain resource, so as to obtain the data transmission parameter.

4. The method according to claim 3, wherein on the basis of time-frequency domain resources that can be allocated by the base station, determining the time-frequency domain resource according to the first time-frequency domain resource and the second time-frequency domain resource, comprises:
determining a requirement for a block error rate during data transmission; and
on the basis of the requirement of the block error rate and the time-frequency domain resources that can be allocated by the base station, determining the time-frequency domain resource according to the first time-frequency domain resource and the second time-frequency domain resource.

5. The method according to claim 1, wherein reconstructing the data signal to obtain the sensing signal at the position of the time-frequency domain resource of the data signal, comprises:
in a case that the channel quality satisfies a preset condition, reconstructing the data signal by means of modulation-based reconstruction, so as to obtain the sensing signal at the position of the time-frequency domain resource where the data signal is located; or,
in a case that the channel quality does not satisfy the preset condition, reconstructing the data signal by means of decoding-based reconstruction, so as to obtain the sensing signal at the position of the time-frequency domain resource where the data signal is located.

6. The method according to claim 5, wherein reconstructing the data signal by means of modulation-based reconstruction, so as to obtain the sensing signal at the position of the time-frequency domain resource where the data signal is located, comprises:
performing channel estimation and channel interpolation on the channel according to a pilot symbol, to obtain a channel coefficient of a position of the time-frequency domain resource where a data symbol is located, the data signal comprising the pilot symbol and the data symbol;
detecting the data symbol on the basis of the channel coefficient to obtain an estimated value of the data symbol;
performing hard decision on the estimated value of the data symbol in a modulation constellation diagram, to obtain a data hard-decision symbol; and
using the pilot symbol and the data hard-decision symbol as the sensing signal at the time-frequency resource position where the data signal is located.

7. The method according to claim 5, wherein reconstructing the data signal by means of decoding-based reconstruction, so as to obtain the sensing signal at the position of the time-frequency domain resource where the data signal is located, comprises:
performing channel estimation and channel interpolation on the channel according to a pilot symbol, to obtain a channel coefficient of a position of the time-frequency domain resource where a data symbol is located, the data signal comprising the pilot symbol and the data symbol;
detecting the data symbol on the basis of the channel coefficient to obtain an estimated value of the data symbol;
performing channel decoding on the estimated value of the data symbol on the basis of the data transmission parameter, to obtain a group of data information bits;
encoding and modulating the group of data information bits on the basis of the data transmission parameter to obtain a group of coded and modulated data symbols, the data transmission parameter comprising a modulation order and a code rate;
setting a coded and modulated data symbol, corresponding to the target data information bit, among the group of coded and modulated data symbols to zero, wherein the target data information bit is a data information bit with a channel decoding error among the group of data information bits; and
using the pilot symbol and the group of coded and modulated data symbols as sensing signals at the position of the time-frequency domain resource where the data signal is located.

8. The method according to claim 1, wherein the communication requirements comprise: the number of data information bits and a block error rate of data transmission; the sensing requirements comprise: sensing parameter accuracy and sensing accuracy; the sensing parameter accuracy comprises: a maximum sensing distance and a sensing distance resolution, a maximum sensing speed and a sensing speed resolution.

9. A method for determining a sensing signal, applied to a terminal, and comprising:
sending a sensing requirement of the terminal to a base station;
obtaining allocation indication information of a time-frequency domain resource and a data transmission parameter sent by the base station; and obtaining a data signal sent by the base station at a position of the time-frequency domain resource of a channel according to the data transmission parameter, wherein the time-frequency domain resource and the data transmission parameter are determined by the base station according to channel quality of the channel, a communication requirement of the base station and a sensing requirement of the terminal, the time-frequency domain resource comprises a time domain resource and a frequency domain resource; and
reconstructing the data signal to obtain a sensing signal at the position of the time-frequency domain resource of the data signal, and sensing the channel and an environment on the basis of the sensing signal.

10. The method according to claim 9, wherein before obtaining the allocation indication information of sent by the base station; and obtaining the data signal sent by the base station at the position of the time-frequency domain resource of the channel according to the data transmission parameter, the method further comprises:
obtaining a channel measurement signal sent by the base station;
determining channel quality of the channel according to the channel measurement signal; and
sending the channel quality of the channel to the base station.

11. The method according to claim 9, wherein reconstructing the data signal to obtain the sensing signal at the position of the time-frequency domain resource where the data signal is located comprises:
in a case that the channel quality satisfies a preset condition, reconstructing the data signal by means of modulation-based reconstruction, so as to obtain the sensing signal at the position of the time-frequency domain resource where the data signal is located; or,
in a case that the channel quality does not satisfy the preset condition, reconstructing the data signal by means of decoding-based reconstruction, so as to obtain the sensing signal at the position of the time-frequency domain resource where the data signal is located.

12. The method according to claim 11, wherein reconstructing the data signal by means of modulation-based reconstruction, so as to obtain the sensing signal at the position of the time-frequency domain resource where the data signal is located, comprises:
performing channel estimation and channel interpolation on the channel according to a pilot symbol, to obtain a channel coefficient of a position of the time-frequency domain resource where a data symbol is located, the data signal comprises the pilot symbol and the data symbol;
detecting the data symbol on the basis of the channel coefficient to obtain an estimated value of the data symbol;
performing hard decision on the estimated value of the data symbol in a modulation constellation diagram, to obtain a data hard-decision symbol; and
using the pilot symbol and the data hard-decision symbol as the sensing signal at the time-frequency resource position where the data signal is located.

13. The method according to claim 11, wherein reconstructing the data signal by means of decoding-based reconstruction, so as to obtain the sensing signal at the position of the time-frequency domain resource where the data signal is located, comprises:
performing channel estimation and channel interpolation on the channel according to a pilot symbol, to obtain a channel coefficient of a position of the time-frequency domain resource where a data symbol is located, the data signal comprises the pilot symbol and the data symbol;
detecting the data symbol on the basis of the channel coefficient to obtain an estimated value of the data symbol;
performing channel decoding on the estimated value of the data symbol on the basis of the data transmission parameter, to obtain a group of data information bits;
coding and modulating the group of data information bits on the basis of the data transmission parameter to obtain a group of coded and modulated data symbols, the data transmission parameter comprising a modulation order and a code rate;
setting a coded and modulated data symbol, corresponding to the target data information bit, among the group of coded and modulated data symbols to zero, wherein the target data information bit is a data information bit with a channel decoding error among the group of data information bits; and
using the pilot symbol and the group of coded and modulated data symbols as sensing signals at the position of the time-frequency domain resource where the data signal is located.

14. A computer readable storage medium, storing a computer program which is configured to, when executed by a processor, cause the processor to implement the steps of the method according to any one of claims 1 to 8, or the steps of the method according to any one of claims 9 to 13.

15. An electronic device, comprising a memory, a processor, and a computer program stored on the memory and executable by the processor, the processor is configured to execute computer program to implement the steps of the method according to any one of claims 1 to 8, or to implement the steps of the method according to any one of claims 9 to 13.
